# EUROPÄISCHE PATENTSCHRIFT

(11) **EP 0 916 548 B1**
(45) Veröffentlichungstag und Bekanntmachung des Hinweises auf die Patenterteilung: **17.04.2002**
(21) Anmeldenummer: 98120470.4
(22) Anmeldetag: 29.10.1998
(51) Int. Cl.: B60K 41/28, F16H 61/02, F16H 59/10

(54) **Automatisiertes Schaltgetriebe und Motorsteuergerät für Kraftfahrzeuge**
Automatic gear shift and engine control system for motor vehicles
Système automatique de changement de vitesses et de commande d'un moteur pour véhicules

(30) Priorität: 14.11.1997 DE 19750417
(43) Veröffentlichungstag der Anmeldung: 19.05.1999
(73) Patentinhaber: Bayerische Motoren Werke Aktiengesellschaft, 80788 München (DE)
(72) Erfinder: Birzl, Willibald, 86668 Karlsfeld (DE); Maurer, Michael, Dr., 80995 München (DE)

(56) Entgegenhaltungen:
- EP-A- 0 400 419
- DE-A- 19 532 124

## Beschreibung

Die Erfindung betrifft ein automatisiertes Schaltgetriebe für Kraftfahrzeuge mit einem Verbrennungsmotor, der über eine Kupplung mit dem Getriebe verbunden ist, umfassend einen der Kupplung zugeordneten ersten Aktuator, einen dem Getriebe zugeordneten zweiten Aktuator, ein dem Verbrennungsmotor zugeordnetes Motorsteuergerät, eine mit dem ersten und dem zweiten Aktuator verbundene Steuereinheit und eine mit der Steuereinheit verbundene Befehlseinrichtung zum Eingeben eines Schaltbefehls zur Durchführung eines Schaltvorgangs.

Bei einem solchen automatisierten Schaltgetriebe braucht der Fahrer zum Hoch- oder Rückschalten des Getriebes lediglich die Befehlseinrichtung zur Abgabe eines entsprechenden Schaltbefehls zu betätigen. Der eigentliche Schaltvorgang und die damit zusammenhängenden Vorgänge, das heißt die Verringerung der Zugkraft des Antriebs, das Auskuppeln, der Gangwechsel, das Einkuppeln und die Steigerung des Motormoments auf den Wert, der der aktuellen Fahrpedalstellung entspricht, erfolgt automatisch entsprechend einem in die Steuereinheit eingegebenen Programm. Die Steuereinheit ist derart programmiert, daß die Änderungsgeschwindigkeit der Zugkraft des Antriebs unmittelbar vor und nach dem Wechsel der Getriebeübersetzung einen Kompromiß zwischen komfortabler und sportlicher Fahrweise darstellt. Der zeitliche Verlauf, das heißt die Änderungsgeschwindigkeit der Zugkraft des Antriebs unmittelbar vor und nach dem Wechsel der Getriebeübersetzung ist durch dieses Programm vorgegeben. Diese Charakteristik der Änderung der Zugkraft kann der Fahrer demzufolge außer durch die Stellung des Fahrpedals praktisch nicht beeinflussen.

Ein derartiges automatisiertes Schaltgetriebe zeigt das gattungsgemässe Dokument EP-A-0 400 419.

Der Erfindung liegt die Aufgabe zugrunde, das gattungsgemäße automatisierte Schaltgetriebe dahingehend weiterzubilden, daß der Fahrer die Möglichkeit hat, die Charakteristik, das heißt den zeitlichen Verlauf der Zugkraft des Antriebs unmittelbar vor und nach dem Wechsel der Getriebeübersetzung den aktuellen Bedürfnissen entsprechend beim Wahlvorgang ohne separate Moduswahl zu wählen.

Erfindungsgemäß wird diese Aufgabe dadurch gelöst, daß die Befehlseinrichtung zum Hoch- oder Rückschalten des Getriebes zur Abgabe von mindesten zwei alternativen Schaltbefehlen an das Motorsteuergerät betätigbar ist, die eine unterschiedliche Änderungsgeschwindigkeit der Zugkraft des Antriebs vor und nach Durchführung des Schaltvorgangs bewirken.

Bei dem erfindungsgemäßen automatisierten Schaltgetriebe hat der Fahrer die Möglichkeit, durch entsprechende Betätigung der Befehlseinrichtung den zeitlichen Verlauf der Zugkraft unmittelbar vor und nach dem Wechsel der Getriebeübersetzung selbst zu wählen. Der Fahrer kann daher mit einem Handgriff den Schaltbefehl erteilen und zugleich den Modus der Änderungsgeschwindigkeit der Zugkraft des Antriebs wählen.

Die Befehlseinrichtung kann beispielsweise aus einem Handschalthebel bestehen, der aus einer Neutralstellung zum Hoch- oder Rückschalten in zwei Stellungen bewegbar ist und an dem eine mit der Steuereinheit verbundene Betätigungstaste angebracht ist, die wahlweise betätigbar ist, um eine vom Normalbetrieb abweichende Änderungsgeschwindigkeit der Zugkraft vor und nach Durchführung des Schaltvorgangs zu bewirken. Der Normalbetrieb ist zweckmäßigerweise auf großen Fahrkomfort, das heißt auf eine mäßige Änderungsgeschwindigkeit der Zugkraft des Antriebs vor und nach dem Wechsel der Getriebeübersetzung ausgelegt. Wenn es die Situation erfordert oder aus einem anderen Grund vom Fahrer eine möglichst geringe Beschleunigungszeit gewünscht wird, dann braucht der Fahrer beim Schalten lediglich die am Handschalthebel angebrachte Betätigungstaste zu betätigen, um die Änderungsgeschwindigkeit der Zugkraft vor und nach dem Wechsel der Getriebeübersetzung zu vergrößern.

Bei einer besonders vorteilhaften Ausführungsform der Erfindung ist vorgesehen, daß die Befehlseinrichtung aus einem Handschalthebel besteht, der aus der Neutralstellung zum Hoch- oder Rückschalten in verschiedenen Richtungen jeweils in mindestens zwei alternative Stellungen bewegbar ist, um eine unterschiedliche Änderungsgeschwindigkeit der Zugkraft des Antriebs vor und nach dem Wechsel der Getriebeübersetzung zu bewirken. Dabei ist vorgesehen, daß die Änderungsgeschwindigkeit der Zugkraft des Antriebs mit der Entfernung des Handschalthebels von der Neutralstellung zunimmt. Die Charakteristik des Abbaus und des Aufbaus der Zugkraft unmittelbar vor und nach dem Wechsel der Getriebeübersetzung kann stetig oder stufenweise variabel sein. Bei einer stufenweisen Änderung dieser Charakteristik sind die entsprechenden Stellungen des Handschalthebels zweckmäßigerweise durch einen Druckpunkt bestimmt.

Ein bevorzugtes Ausführungsbeispiel der Erfindung ist in der Zeichnung dargestellt und nachfolgend näher erläutert. Es zeigt:
Fig. 1 ein Blockschaltbild des automatisierten Schaltgetriebes, und
Fig. 2 ein Diagramm zur Veranschaulichung der Änderung der Zugkraft unmittelbar vor und nach dem Wechsel der Getriebeübersetzung.

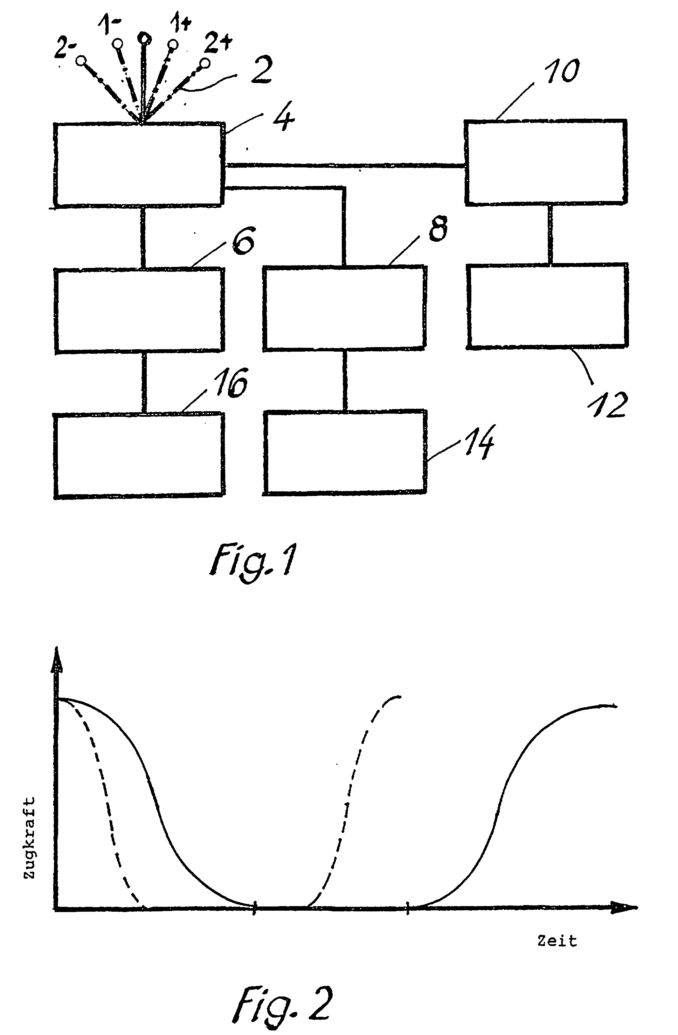

Wie aus Fig. 1 hervorgeht, umfaßt ein automatisiertes Schaltgetriebe eine mit einem Handschalthebel 2 versehene Steuereinheit 4. Die Steuereinheit 4 ist mit einem ersten Aktuator 6, einem zweiten Aktuator 8 und einem Motorsteuergerät 10 elektrisch verbunden. Das Motorsteuergerät 10 ist mit einem Verbrennungsmotor 12 bzw. dem sogenannten Motormanagement elektrisch verbunden, um das Drehmoment des Motors entsprechend den von der Steuereinheit 4 gelieferten Signalen zu steuern. Der zweite Aktuator 8 ist mit einem Schaltgetriebe 14 verbunden, um entsprechend den von der Steuereinheit 4 gelieferten Signalen die Getriebeübersetzung zu ändern. Der erste Aktuator 6 ist mit einer Kupplung 16 verbunden, um entsprechend den von der Steuereinheit 4 gelieferten Signalen den Kraftfluß vom Motor 12 zum Schaltgetriebe 14 zu unterbrechen.

Der Handschalthebel 2 kann aus einer Neutralstellung zum Hoch- oder Rückschalten des Getriebes 14 in entgegengesetzten Richtungen wahlweise in eine Mittelstellung 1+ bzw. 1- oder in eine Endstellung 2+ bzw. 2- bewegt werden. Die beiden Mittelstellungen 1+ und 1- sind durch einen Druckpunkt bestimmt, damit der Fahrer den Handschalthebel 2 eindeutig positionieren kann. Die Steuereinheit 4 ist so programmiert, daß in den Stellungen 1+ und 1- ein verhältnismäßig sanfter Zugkraftverlauf unmittelbar vor und nach dem Wechsel der Getriebeübersetzung für hohen Fahrkomfort erreicht wird, wohingegen in den Stellungen 2+ und 2- die Zugkraftänderung rasch und mit hoher Beschleunigung des Fahrzeugs, d.h. mit großer Dynamik durchgeführt wird.

Wenn der Fahrer zum Hochschalten den Handschalthebel 2 aus der Neutralstellung in die Zwischenstellung 1+ bewegt, dann gibt die Steuereinheit 4 entsprechend dem eingegebenen Programm Steuersignale an den ersten Aktuator 6, den zweiten Aktuator 8 und an das Motorsteuergerät 10 ab. Das Motorsteuergerät 10 verringert daraufhin die Drehzahl und das Drehmoment des Motors 12, der erste Aktuator 6 öffnet die Kupplung 16, und der zweite Aktuator 8 betätigt das Schaltgetriebe 14, um den gewünschten Wechsel der Getriebeübersetzung vorzunehmen, d.h. um einen Gang zu höher zu schalten. Daraufhin wird der erste Aktuator 6 von der Steuereinheit 4 angesteuert, um die Kupplung 16 wieder zu schließen, und das Motorsteuergerät 10 wird von der Steuereinheit 4 angesteuert, um das Drehmoment des Motors 12 auf den durch das Fahrpedal vorgegebenen aktuellen Wert zu bringen. Der zeitliche Verlauf der Zugkraft unmittelbar vor und nach dem Wechsel der Getriebeübersetzung in der Stellung 1+ des Handschalthebels 2 ist in Fig. 2 mit einer durchgezogenen Linie dargestellt.

Wenn der Fahrer einen sportlichen Schaltvorgang bevorzugt oder die augenblickliche Situation einen kurzen Schaltvorgang und eine große Beschleunigung des Kraftfahrzeugs erforderlich macht, dann braucht der Fahrer den Handschalthebel 2 lediglich über die Zwischenstellung 1+ hinaus in die Endstellung 2+ zu bewegen. In der Endstellung 2+ des Handschalthebels 2 wird das Motorsteuergerät 10 von der Steuereinheit 4 so angesteuert, daß die Zugkraft des Antriebs 12 unmittelbar vor und nach dem Wechsel der Getriebeübersetzung sehr rasch abgebaut und sehr rasch wieder aufgebaut wird. Dieser zeitliche Verlauf der Zugkraft ist in Fig. 2 mit einer unterbrochenen Linie dargestellt. Es ist erkennbar, daß das ursprüngliche Drehmoment nach dem Wechsel der Getriebeübersetzung zu einem wesentlich früheren Zeitpunkt wieder erreicht wird als bei einem Wechsel der Getriebeübersetzung gemäß der durchgezogenen Linie, d.h. bei der Zwischenstellung 1+ des Handschalthebels 2.

Es bedarf keiner weiteren Erläuterung, daß die Darstellung des zeitlichen Verlaufs der Zugkraft gemäß Fig. 2 sinngemäß auch für das Rückschalten des Getriebes zutrifft, wenn der Handschalthebel 2 entweder in die Zwischenstellung 1-oder in die Endstellung 2- bewegt wird.

Abweichend von dem gezeigten Ausführungsbeispiel wäre auch eine stetige Auswahl von Varianten des zeitlichen Verlaufs der Zugkraft vor und nach dem Wechsel der Getriebeübersetzung möglich, wenn der Handschalthebel keine einzelnen Schaltstufen hat.

Eine weitere Abwandlung des gezeigten Ausführungsbeispiels könnte darin bestehen, daß der Handschalthebel aus der Neutralstellung nur in die beiden Komfortstellungen 1+ bzw. 1- bewegt werden kann und daß an dem Handschalthebel eine zusätzliche Betätigungstaste angebracht ist, die wahlweise betätigbar ist, um anstelle des Komfortbetriebs eine sportliche Änderung der Zugkraft vor und nach dem Wechsel der Getriebeübersetzung zu ermöglichen. Auch bei dieser Ausführungsform kann der Fahrer mit einem Handgriff den Schaltbefehl erteilen und zugleich den Modus der Zugkraftänderungsgeschwidigkeit wählen.

### Bezugszeichenliste:

- 2: Handschalthebel
- 4: Steuereinheit
- 6: erster Aktuator
- 8: zweiter Aktuator
- 10: Motorsteuergerät
- 12: Verbrennungsmotor
- 14: Schaltgetriebe
- 16: Kupplung

## Patentansprüche

1. Automatisiertes Schaltgetriebe für Kraftfahrzeuge mit einem Verbrennungsmotor, der über eine Kupplung (16) mit dem Getriebe verbunden ist, umfassend einen der Kupplung zugeordneten ersten Aktuator (6), einen dem Getriebe zugeordneten zweiten Aktuator (8), ein dem Verbrennungsmotor zugeordnetes Motorsteuergerät (10), eine mit dem ersten und dem zweiten Aktuator verbundene Steuereinheit (4) und eine mit der Steuereinheit verbundene Befehlseinrichtung (2) zum Eingeben eines Schaltbefehls zur Durchführung eines Schaltvorgangs, **dadurch gekennzeichnet, daß** die Befehlseinrichtung (2) zum Hoch- oder Rückschalten des Getriebes (14) zur Abgabe von mindestens zwei alternativen Schaltbefehlen an das Motorsteuergerät (10) betätigbar ist, die eine unterschiedliche Änderungsgeschwindigkeit der Zugkraft des Antriebs vor und nach Durchführung des Schaltvorgangs bewirken.

2. Automatisiertes Schaltgetriebe nach Anspruch 1, **dadurch gekennzeichnet, daß** die Befehlseinrichtung aus einem Handschalthebel besteht, der aus einer Neutralstellung zum Hoch- oder Rückschalten in zwei Stellungen bewegbar ist und an dem eine mit der Steuereinheit verbundene Betätigungstaste angebracht ist, die wahlweise betätigbar ist, um eine vom Normalbetrieb abweichende Änderungsgeschwindigkeit der Zugkraft vor und nach dem Wechsel der Getriebeübersetzung zu bewirken.

3. Automatisiertes Schaltgetriebe nach Anspruch 1, **dadurch gekennzeichnet, daß** die Befehlseinrichtung aus einem Handschalthebel besteht, der aus der Neutralstellung zum Hoch- oder Rückschalten in verschiedenen Richtungen jeweils in mindestens zwei alternative Stellungen bewegbar ist, um eine unterschiedliche Änderungsgeschwindigkeit der Zugkraft des Antriebs vor und nach Durchführung des Schaltvorgangs zu bewirken.

4. Automatisiertes Schaltgetriebe nach Anspruch 3, **dadurch gekennzeichnet, daß** die Änderungsgeschwindigkeit der Zugkraft des Antriebs mit der Entfernung des Handschalthebels (2) von der Neutralstellung zunimmt.

5. Automatisiertes Schaltgetriebe nach Anspruch 3 oder 4, **dadurch gekennzeichnet, daß** die Zwischenstellungen des Handschalthebels (2) durch einen Druckpunkt bestimmt sind.

## Claims

1. An automatic gear-shift mechanism for motor vehicles comprising an internal combustion engine connected by a clutch (16) to the gear unit, the mechanism comprising a first actuator (6) associated with the clutch, a second actuator (8) associated with the gear unit, an engine control device (10) associated with the engine, a control unit (4) connected to the first and the second actuator and an instruction means (2) connected to the control unit for inputting an instruction to perform a gear-shifting operation, **characterised in that** in order to shift the unit (14) to a higher or lower gear, the instruction means (2) can be actuated so as to deliver at least two alternative shift instructions to the engine control unit (10), resulting in different rates of change of the tensile force of the drive before and after the shift operation.

2. An automatic gear-shift mechanism according to claim 1, **characterised in that** the instruction means comprises a manual gear-shift lever movable from a neutral position into two positions for gearing up and down and provided with an actuating key connected to the control unit and actuatable when required in order to produce a different from normal rate of change in the tensile force before and after the change in the gear transmission ratio.

3. An automatic gear-shift mechanism according to claim 1, **characterised in that** the instruction means comprises a manual lever movable from the neutral position in different directions for gearing up or down and in each case movable into at least two alternative positions in order to vary the rate of change of the tensile force of the drive before and after the gear-shift operation.

4. An automatic gear-shift mechanism according to claim 3, **characterised in that** the rate of change of the tensile force of the drive increases with the distance of the manual gear-shift lever (2) from the neutral position.

5. An automatic gear-shift mechanism according to claim 3 or claim 4, **characterised in that** the intermediate positions of the gear-shift lever (2) are determined by a pressure point.

## Revendications

1. Système automatique de changement de vitesse pour des véhicules entraînés par un moteur à combustion interne relié par un embrayage (16) à la boîte de vitesses, comprenant un premier actionneur (6) associé à l'embrayage, un second actionneur (8) associé à la boîte de vitesses, un appareil (10) de commande du moteur associé au moteur à combustion interne, une unité de commande (4) reliée au premier et au second actionneur, ainsi qu'un dispositif de commande (2) relié à l'unité de commande pour donner un ordre d'exécution d'un changement de rapport,
**caractérisé en ce que**
le dispositif de commande (2) pour faire monter ou descendre le rapport de transmission (14) peut être actionné de manière à délivrer, à l'appareil de commande (10) du moteur, au moins deux ordres alternatifs de changement qui provoquent une vitesse de changement de la force motrice d'entraînement différente, avant et après l'exécution de l'opération de changement de rapport.

2. Système automatique de changement de vitesse selon la revendication 1,
**caractérisé en ce que**
le dispositif de commande est composé d'un levier de changement de vitesse qui, à partir d'une position neutre peut être amené dans deux positions, pour monter ou descendre le rapport, et sur lequel est monté un bouton d'actionnement relié à l'unité de commande, et qui peut être actionné à volonté pour provoquer une vitesse de changement de la force motrice, avant et après le changement du rapport de transmission, s'écartant du fonctionnement normal.

3. Système automatique de changement de vitesse selon la revendication 1,
**caractérisé en ce que**
le dispositif de commande est composé d'un levier de changement de vitesse qui, à partir d'une position neutre, peut être déplacé pour faire monter et descendre le rapport de transmission dans des sens différents et venir chaque fois occuper deux positions alternatives, afin de provoquer une vitesse différente de changement de la force motrice d'entraînement, avant et après l'exécution de l'opération de changement.

4. Système automatique de changement de vitesse selon la revendication 3,
**caractérisé en ce que**
la vitesse de changement de la force motrice d'entraînement augmente quand le levier de changement de vitesse (2) s'éloigne de la position neutre.

5. Système automatique de changement de vitesse selon les revendications 3 ou 4,
**caractérisé en ce que**
les positions intermédiaires de changement de vitesse (2) sont définies par un point de poussée.
